# EUROPEAN PATENT SPECIFICATION

(11) **EP 4 059 692 B1**
(45) Date of publication and mention of the grant of the patent: **19.03.2025**
(21) Application number: 22158131.7
(22) Date of filing: 23.02.2022
(51) Int. Cl.: B29C 45/50, B29C 45/76

(54) **INJECTION MOLDING MACHINE**
SPRITZGIESSMASCHINE
MACHINE DE MOULAGE À INJECTION

(30) Priority: 26.02.2021 JP 2021030861
(43) Date of publication of application: 21.09.2022
(73) Proprietor: SUMITOMO HEAVY INDUSTRIES, LTD., Tokyo 141-6025 (JP)
(72) Inventor: YATO, Hiroyasu, Chiba, 263-0001 (JP); HOTTA, Daigo, Chiba, 263-0001 (JP); ONO, Hajime, Chiba, 263-0001 (JP)
(74) Representative: Louis Pöhlau Lohrentz

(56) References cited:
- EP-A1- 1 004 421
- EP-A1- 3 135 455
- EP-A2- 0 230 488
- EP-A2- 1 125 711
- EP-A2- 1 293 325
- DE-A1- 10 304 577
- US-A1- 2004 037 915
- US-B1- 6 517 336
- US-B2- 6 935 111

## Description

### BACKGROUND OF THE INVENTION

### Field of the Invention

The present invention relates to an injection molding machine.

### Description of Related Art

An injection unit of an injection molding machine disclosed in Japanese Unexamined Patent Publication No. 2018-69628 includes a cylinder that heats a molding material, a screw disposed to be rotatable and freely advanced and retreated inside the cylinder, a plasticizing motor that rotates the screw, an injection motor that advances and retreats the screw, and an injection frame to which the cylinder is fixed. The plasticizing motor and the injection motor are fixed to the injection frame. Therefore, when the injection motor advances and retreats the screw, a drive target to be advanced and retreated by the injection motor does not include the plasticizing motor. Therefore, an inertia of the drive target of the injection motor is small, and acceleration/deceleration of the screw is fast.

An injection molding machine comprising a cylinder, a screw that is rotatable and freely advanced and retreated inside the cylinder, a plasticizing motor configured to rotate the screw, a rotation transmission mechanism configured to transmit a rotation force of the plasticizing motor to the screw, and an injection frame to which the cylinder is fixed is known from the EP 1 004 421 A1, US 2004/037915 A1, EP 0 230 488 A2, and EP 1 125 711 A2. Furthermore, EP 3 135 455 A1 discloses an injection molding machine with a ball screw mechanism, and DE 103 04 577 A1 discloses an injection molding machine applying a pressure sensor.

### SUMMARY OF THE INVENTION

A rotor of the plasticizing motor disclosed in Japanese Unexamined Patent Publication No. 2018-69628 includes a hollow shaft. Inside the hollow shaft, a mechanism is provided that transmits a rotation force of the plasticizing motor to the screw and allows the screw to be advanced and retreated with respect to the rotor of the plasticizing motor.

In the related art, many components are packed inside the hollow shaft of a plasticizing motor, and it is difficult to have an access to each of the components. In addition, in the related art, an inner diameter of the hollow shaft is large, and the plasticizing motor increases in size. Consequently, cost of the plasticizing motor is high.

One aspect of the present invention is to provide a technique for reducing cost of a plasticizing motor by improving an access to a component of an injection unit.

The aforementioned objective is achieved by injection molding machines according to the independent claims.

According to one aspect of the present invention, there is provided an injection molding machine including a cylinder, a screw, a plasticizing motor, a rotation transmission mechanism, and an injection frame, according to claim 1 or 2. The cylinder heats a molding material. The screw is provided to be rotatable and freely advanced and retreated inside the cylinder. The plasticizing motor rotates the screw. The rotation transmission mechanism transmits a rotation force of the plasticizing motor to the screw, and allows the screw to be advanced and retreated with respect to the plasticizing motor. The cylinder is fixed to the injection frame. The plasticizing motor is fixed to the injection frame. The rotation transmission mechanism includes a spline. A rotation center line of the screw and a rotation center line of the spline are shifted in parallel.

According to one aspect of the present invention, the rotation center line of the screw and the rotation center line of the spline are shifted in parallel. In this manner, the number of components disposed on the same straight line as the rotation center line of the screw can be reduced, and an access to each of the components can be improved. In addition, the rotation center line of the screw and the rotation center line of the spline are shifted in parallel. In this manner, many components may not be packed inside a rotor of the plasticizing motor. Accordingly, the plasticizing motor can be miniaturized, and cost of the plasticizing motor can be reduced.

### BRIEF DESCRIPTION OF THE DRAWINGS

FIG. 1 is a view illustrating a state when mold opening is completed in an injection molding machine according to an embodiment.
FIG. 2 is a view illustrating a state when mold clamping is performed in the injection molding machine according to the embodiment.
FIG. 3 is a sectional view illustrating a state when filling starts in an injection unit according to the embodiment.
FIG. 4 is a sectional view illustrating a state when the filling is completed in the injection unit according to the embodiment.
FIG. 5 is a sectional view illustrating a state when filling starts in an injection unit according to a first modification example.
FIG. 6 is a sectional view illustrating a state when the filling is completed in the injection unit according to the first modification example.
FIG. 7 is a sectional view illustrating a state when filling starts in an injection unit according to a second modification example.
FIG. 8 is a sectional view illustrating a state when the filling is completed in the injection unit according to the second modification example.

### DETAILED DESCRIPTION OF THE INVENTION

Hereinafter, embodiments of the present invention will be described with reference to the drawings. In each drawing, the same reference numerals will be assigned to the same or corresponding configurations, and description thereof may be omitted.

### Injection Molding Machine

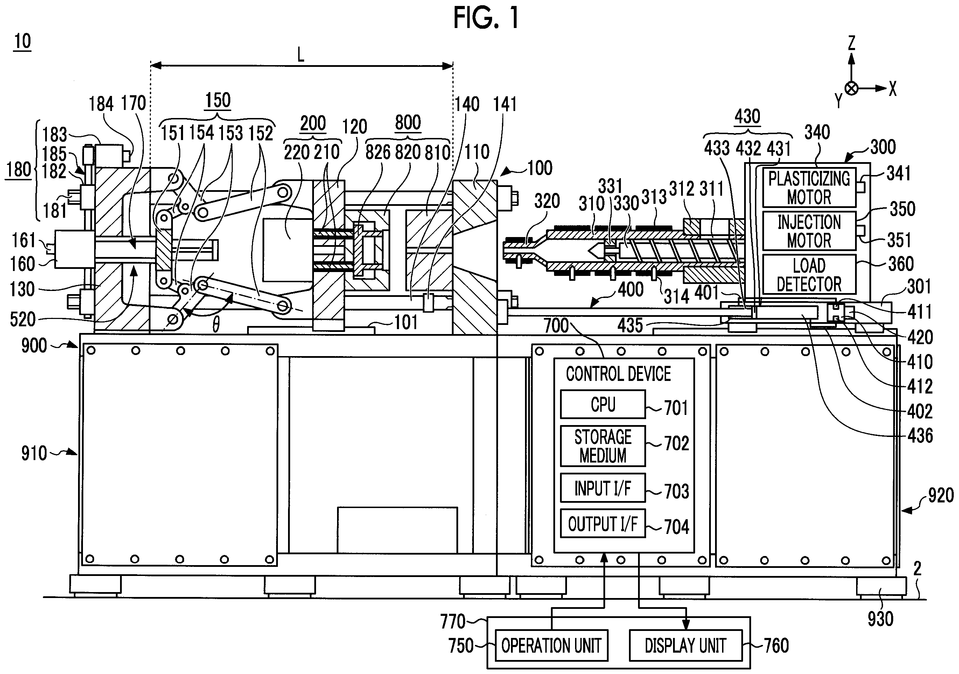

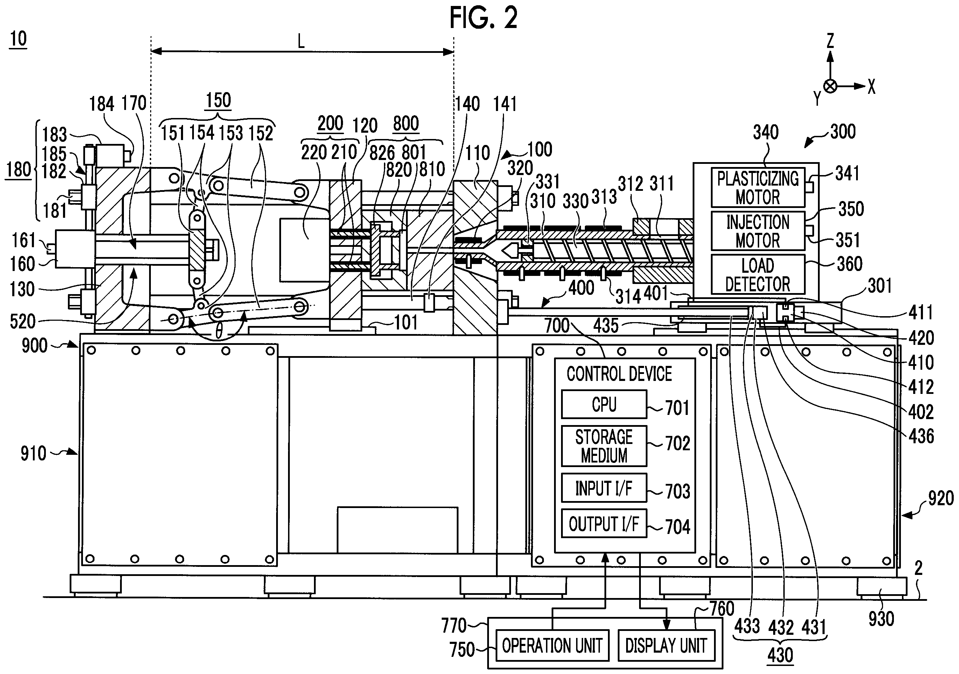

FIG. 1 is a view illustrating a state when mold opening is completed in an injection molding machine according to an embodiment. FIG. 2 is a view illustrating a state when mold clamping is performed in the injection molding machine according to the embodiment. In the present specification, an X-axial direction, a Y-axial direction, and a Z-axial direction are perpendicular to each other. The X-axial direction and the Y-axial direction represent a horizontal direction, and the Z-axial direction represents a vertical direction. When a mold clamping unit 100 is a horizontal type, the X-axial direction represents a mold opening and closing direction, and the Y-axial direction represents a width direction of the injection molding machine 10. A negative side in the Y-axial direction will be referred to as an operation side, and a positive side in the Y-axial direction will be referred to as an anti-operation side.

As illustrated in FIGS. 1 and 2, the injection molding machine 10 includes a mold clamping unit 100 that opens and closes a mold unit 800, an ejector unit 200 that ejects a molding product molded by the mold unit 800, an injection unit 300 that injects a molding material into the mold unit 800, a moving unit 400 that advances and retreats the injection unit 300 with respect to the mold unit 800, a control device 700 that controls each component of the injection molding machine 10, and a frame 900 that supports each component of the injection molding machine 10. The frame 900 includes a mold clamping unit frame 910 that supports the mold clamping unit 100, and an injection unit frame 920 that supports the injection unit 300. The mold clamping unit frame 910 and the injection unit frame 920 are respectively installed on a floor 2 via a leveling adjuster 930. The control device 700 is disposed in an internal space of the injection unit frame 920. Hereinafter, each component of the injection molding machine 10 will be described.

### Mold Clamping Unit

In describing the mold clamping unit 100, a moving direction of a movable platen 120 during mold closing (for example, a positive direction of an X-axis) will be defined as forward, and a moving direction of the movable platen 120 during mold opening (for example, a negative direction of the X-axis) will be defined as rearward.

The mold clamping unit 100 performs mold closing, pressurizing, mold clamping, depressurizing, and mold opening of the mold unit 800. The mold unit 800 includes a stationary die 810 and a movable die 820.

For example, the mold clamping unit 100 is a horizontal type, and the mold opening and closing direction is a horizontal direction. The mold clamping unit 100 includes a stationary platen 110 to which the stationary die 810 is attached, a movable platen 120 to which the movable die 820 is attached, and a moving mechanism 102 that moves the movable platen 120 in the mold opening and closing direction with respect to the stationary platen 110.

The stationary platen 110 is fixed to the mold clamping unit frame 910. The stationary die 810 is attached to a surface facing the movable platen 120 in the stationary platen 110.

The movable platen 120 is disposed to be movable in the mold opening and closing direction with respect to the mold clamping unit frame 910. A guide 101 that guides the movable platen 120 is laid on the mold clamping unit frame 910. The movable die 820 is attached to a surface facing the stationary platen 110 in the movable platen 120.

The movable platen 120 is advanced and retreated with respect to the stationary platen 110. In this manner, the moving mechanism 102 performs mold closing, pressurizing, mold clamping, depressurizing, and mold opening of the mold unit 800. The moving mechanism 102 includes a toggle support 130 disposed at an interval from the stationary platen 110, a tie bar 140 that connects the stationary platen 110 and the toggle support 130 to each other, a toggle mechanism 150 that moves the movable platen 120 in the mold opening and closing direction with respect to the toggle support 130, a mold clamping motor 160 that operates the toggle mechanism 150, a motion conversion mechanism 170 that converts a rotary motion into a linear motion of the mold clamping motor 160, and a mold space adjustment mechanism 180 that adjusts an interval between the stationary platen 110 and the toggle support 130.

The toggle support 130 is disposed at an interval from the stationary platen 110, and is mounted on the mold clamping unit frame 910 to be movable in the mold opening and closing direction. The toggle support 130 may be disposed to be movable along a guide laid on the mold clamping unit frame 910. The guide of the toggle support 130 may be common to the guide 101 of the movable platen 120.

In the present embodiment, the stationary platen 110 is fixed to the mold clamping unit frame 910, and the toggle support 130 is disposed to be movable in the mold opening and closing direction with respect to the mold clamping unit frame 910. However, the toggle support 130 may be fixed to the mold clamping unit frame 910, and the stationary platen 110 may be disposed to be movable in the mold opening and closing direction with respect to the mold clamping unit frame 910.

The tie bar 140 connects the stationary platen 110 and the toggle support 130 to each other at an interval L in the mold opening and closing direction. A plurality of (for example, four) tie bars 140 may be used. The plurality of tie bars 140 are disposed parallel to each other in the mold opening and closing direction, and extend in accordance with a mold clamping force. At least one of the tie bars 140 may be provided with a tie bar strain detector 141 that detects a strain of the tie bar 140. The tie bar strain detector 141 transmits a signal indicating a detection result thereof to the control device 700. The detection result of the tie bar strain detector 141 is used in detecting the mold clamping force.

In the present embodiment, as a mold clamping force detector for detecting the mold clamping force, the tie bar strain detector 141 is used. However, the present invention is not limited thereto. The mold clamping force detector is not limited to a strain gauge type. The mold clamping force detector may be a piezoelectric type, a capacitive type, a hydraulic type, or an electromagnetic type, and an attachment position thereof is not limited to the tie bar 140.

The toggle mechanism 150 is disposed between the movable platen 120 and the toggle support 130, and moves the movable platen 120 in the mold opening and closing direction with respect to the toggle support 130. The toggle mechanism 150 has a crosshead 151 that moves in the mold opening and closing direction, and a pair of link groups bent and stretched by a movement of the crosshead 151. Each of the pair of link groups has a first link 152 and a second link 153 which are connected to be freely bent and stretched by a pin. The first link 152 is oscillatingly attached to the movable platen 120 by a pin. The second link 153 is oscillatingly attached to the toggle support 130 by a pin. The second link 153 is attached to the crosshead 151 via a third link 154. When the crosshead 151 is advanced and retreated with respect to the toggle support 130, the first link 152 and the second link 153 are bent and stretched, and the movable platen 120 is advanced and retreated with respect to the toggle support 130.

A configuration of the toggle mechanism 150 is not limited to configurations illustrated in FIGS. 1 and 2. For example, in FIGS. 1 and 2, the number of nodes in each link group is five, but may be four. One end portion of the third link 154 may be connected to the node between the first link 152 and the second link 153.

The mold clamping motor 160 is attached to the toggle support 130, and operates the toggle mechanism 150. The mold clamping motor 160 advances and retreats the crosshead 151 with respect to the toggle support 130. In this manner, the first link 152 and second link 153 are bent and stretched so that the movable platen 120 is advanced and retreated with respect to the toggle support 130. The mold clamping motor 160 is directly connected to the motion conversion mechanism 170, but may be connected to the motion conversion mechanism 170 via a belt or a pulley.

The motion conversion mechanism 170 converts a rotary motion of the mold clamping motor 160 into a linear motion of the crosshead 151. The motion conversion mechanism 170 includes a screw shaft and a screw nut screwed to the screw shaft. A ball or a roller may be interposed between the screw shaft and the screw nut.

The mold clamping unit 100 performs a mold closing process, a pressurizing process, a mold clamping process, a depressurizing process, and a mold opening process under the control of the control device 700.

In the mold closing process, the mold clamping motor 160 is driven to advance the movable platen 120 by advancing the crosshead 151 to a mold closing completion position at a set movement speed. In this manner, the movable die 820 is caused to touch the stationary die 810. For example, a position or a movement speed of the crosshead 151 is detected by using a mold clamping motor encoder 161. The mold clamping motor encoder 161 detects rotation of the mold clamping motor 160, and transmits a signal indicating a detection result thereof to the control device 700.

A crosshead position detector for detecting a position of the crosshead 151 and a crosshead movement speed measurer for measuring a movement speed of the crosshead 151 are not limited to the mold clamping motor encoder 161, and a general detector can be used. In addition, a movable platen position detector for detecting a position of the movable platen 120 and a movable platen movement speed measurer for measuring a movement speed of the movable platen 120 are not limited to the mold clamping motor encoder 161, and a general detector can be used.

In the pressurizing process, the mold clamping motor 160 is further driven to further advance the crosshead 151 from the mold closing completion position to a mold clamping position, thereby generating a mold clamping force.

In the mold clamping process, the mold clamping motor 160 is driven to maintain a position of the crosshead 151 at the mold clamping position. In the mold clamping process, the mold clamping force generated in the pressurizing process is maintained. In the mold clamping process, a cavity space 801 (refer to FIG. 2) is formed between the movable die 820 and the stationary die 810, and the injection unit 300 fills the cavity space 801 with a liquid molding material. A molding product is obtained by solidifying the molding material filled therein.

The number of the cavity spaces 801 may be one or more. In the latter case, a plurality of the molding products can be obtained at the same time. An insert material may be disposed in a portion of the cavity space 801, and the other portion of the cavity space 801 may be filled with the molding material. A molding product in which the insert material and the molding material are integrated with each other can be obtained.

In the depressurizing process, the mold clamping motor 160 is driven to retreat the crosshead 151 from the mold clamping position to a mold opening start position. In this manner, the movable platen 120 is retreated to reduce the mold clamping force. The mold opening start position and the mold closing completion position may be the same position.

In the mold opening process, the mold clamping motor 160 is driven to retreat the crosshead 151 from the mold opening start position to the mold opening completion position at a set movement speed. In this manner, the movable platen 120 is retreated so that the movable die 820 is separated from the stationary die 810. Thereafter, the ejector unit 200 ejects the molding product from the movable die 820.

Setting conditions in the mold closing process, the pressurizing process, and the mold clamping process are collectively set as a series of setting conditions. For example, the movement speed or positions of the crosshead 151 (including the mold closing start position, the movement speed switching position, the mold closing completion position, and the mold clamping position) and the mold clamping force in the mold closing process and the pressurizing process are collectively set as a series of setting conditions. The mold closing start position, the movement speed switching position, the mold closing completion position, and the mold clamping position are aligned in this order from a rear side toward a front side, and represent a start point and an end point of a section in which the movement speed is set. The movement speed is set for each section. The number of the movement speed switching positions may be one or more. The movement speed switching position may not be set. Only one of the mold clamping position and the mold clamping force may be set.

The setting conditions in the depressurizing process and the mold opening process are set in the same manner. For example, the movement speed or positions (the mold opening start position, the movement speed switching position, and the mold opening completion position) of the crosshead 151 in the depressurizing process and the mold opening process are collectively set as a series of setting conditions. The mold opening start position, the movement speed switching position, and the mold opening completion position are aligned in this order from the front side toward the rear side, and represent the start point and the end point of the section in which the movement speed is set. The movement speed is set for each section. The number of the movement speed switching positions may be one or more. The movement speed switching position may not be set. The mold opening start position and the mold closing completion position may be the same position. In addition, the mold opening completion position and the mold closing start position may be the same position.

Instead of the movement speed or the position of the crosshead 151, the movement speed or the position of the movable platen 120 may be set. In addition, instead of the position (for example, the mold clamping position) of the crosshead or the position of the movable platen, the mold clamping force may be set.

Incidentally, the toggle mechanism 150 amplifies a driving force of the mold clamping motor 160, and transmits the driving force to the movable platen 120. An amplification magnification is referred to as a toggle magnification. The toggle magnification is changed according to an angle θ (hereinafter, also referred to as a "link angle θ") formed between the first link 152 and the second link 153. The link angle θ is obtained from the position of the crosshead 151. When the link angle θ is 180°, the toggle magnification is maximized.

When a mold space of the mold unit 800 is changed due to replacement of the mold unit 800 or a temperature change in the mold unit 800, mold space adjustment is performed so that a predetermined mold clamping force is obtained during the mold clamping. For example, in the mold space adjustment, the interval L between the stationary platen 110 and the toggle support 130 is adjusted so that the link angle θ of the toggle mechanism 150 becomes a predetermined angle when the movable die 820 touches the stationary die 810.

The mold clamping unit 100 has the mold space adjustment mechanism 180. The mold space adjustment mechanism 180 performs the mold space adjustment by adjusting the interval L between the stationary platen 110 and the toggle support 130. For example, a timing for the mold space adjustment is determined from an end point of a molding cycle to a start point of a subsequent molding cycle. For example, the mold space adjustment mechanism 180, has a screw shaft 181 formed in a rear end portion of the tie bar 140, a screw nut 182 held by the toggle support 130 to be rotatable and not to be advanced and retreated, and a mold space adjustment motor 183 that rotates the screw nut 182 screwed to the screw shaft 181.

The screw shaft 181 and the screw nut 182 are provided for each of the tie bars 140. A rotational driving force of the mold space adjustment motor 183 may be transmitted to a plurality of the screw nuts 182 via a rotational driving force transmitting unit 185. The plurality of screw nuts 182 can be rotated in synchronization with each other. The plurality of screw nuts 182 can be individually rotated by changing a transmission channel of the rotational driving force transmitting unit 185.

For example, the rotational driving force transmitting unit 185 is configured to include a gear. In this case, a driven gear is formed on an outer periphery of each screw nut 182, a driving gear is attached to an output shaft of the mold space adjustment motor 183, and a plurality of intermediate gears meshing with the driven gear and the driving gear are held to be rotatable in a central portion of the toggle support 130. The rotational driving force transmitting unit 185 may be configured to include a belt or a pulley instead of the gear.

An operation of the mold space adjustment mechanism 180 is controlled by the control device 700. The control device 700 drives the mold space adjustment motor 183 to rotate the screw nut 182. As a result, a position of the toggle support 130 with respect to the tie bar 140 is adjusted, and the interval L between the stationary platen 110 and the toggle support 130 is adjusted. In addition, a plurality of the mold space adjustment mechanisms may be used in combination.

The interval L is detected by using the mold space adjustment motor encoder 184. The mold space adjustment motor encoder 184 detects a rotation amount or a rotation direction of the mold space adjustment motor 183, and transmits a signal indicating a detection result thereof to the control device 700. The detection result of the mold space adjustment motor encoder 184 is used in monitoring or controlling the position or the interval L of the toggle support 130. A toggle support position detector for detecting the position of the toggle support 130 and an interval detector for detecting the interval L are not limited to the mold space adjustment motor encoder 184, and a general detector can be used.

The mold clamping unit 100 may have a mold temperature controller that adjusts the temperature of the mold unit 800. The mold unit 800 has a flow path of the temperature control medium inside the mold unit 800. The mold temperature controller adjusts the temperature of the mold unit 800 by adjusting the temperature of the temperature control medium supplied to the flow path of the mold unit 800.

The mold clamping unit 100 of the present embodiment is the horizontal type in which the mold opening and closing direction is the horizontal direction, but may be a vertical type in which the mold opening and closing direction is an upward-downward direction.

The mold clamping unit 100 of the present embodiment has the mold clamping motor 160 as a drive unit . However, a hydraulic cylinder may be provided instead of the mold clamping motor 160. In addition, the mold clamping unit 100 may have a linear motor for mold opening and closing, and may have an electromagnet for mold clamping.

### Ejector Unit

In describing the ejector unit 200, similarly to the description of the mold clamping unit 100, a moving direction of the movable platen 120 during the mold closing (for example, the positive direction of the X-axis) will be defined as forward, and a moving direction of the movable platen 120 during the mold opening (for example, the negative direction of the X-axis) will be defined as rearward.

The ejector unit 200 is attached to the movable platen 120, and is advanced and retreated together with the movable platen 120. The ejector unit 200 has an ejector rod 210 that ejects a molding product from the mold unit 800, and a drive mechanism 220 that moves the ejector rod 210 in the moving direction (X-axial direction) of the movable platen 120.

The ejector rod 210 is disposed to be freely advanced and retreated in a through-hole of the movable platen 120. A front end portion of the ejector rod 210 comes into contact with an ejector plate 826 of the movable die 820. The front end portion of the ejector rod 210 may be connected to or may not be connected to the ejector plate 826.

For example, the drive mechanism 220 has an ejector motor and a motion conversion mechanism that converts a rotary motion of the ejector motor into a linear motion of the ejector rod 210. The motion conversion mechanism includes a screw shaft and a screw nut screwed to the screw shaft. A ball or a roller may be interposed between the screw shaft and the screw nut.

The ejector unit 200 performs an ejection process under the control of the control device 700. In the ejection process, the ejector rod 210 is advanced from a standby position to an ejection position at a set movement speed. In this manner, the ejector plate 826 is advanced to eject the molding product. Thereafter, the ejector motor is driven to retreat the ejector rod 210 at a set movement speed, and the ejector plate 826 is retreated to an original standby position.

For example, a position or a movement speed of the ejector rod 210 is detected by using an ejector motor encoder. The ejector motor encoder detects the rotation of the ejector motor, and transmits a signal indicating a detection result thereof to the control device 700. An ejector rod position detector for detecting the position of the ejector rod 210, and an ejector rod movement speed measurer for measuring the movement speed of the ejector rod 210 are not limited to the ejector motor encoder, and a general detector can be used.

### Injection Unit

In describing the injection unit 300, unlike the description of the mold clamping unit 100 or the description of the ejector unit 200, a moving direction of the screw 330 during filling (for example, the negative direction of the X-axis) will be defined as forward, and a moving direction of the screw 330 during plasticizing (for example, the positive direction of the X-axis) will be defined as rearward.

The injection unit 300 is installed in a slide base 301, and the slide base 301 is disposed to be freely advanced and retreated with respect to the injection unit frame 920. The injection unit 300 is disposed as to be freely advanced and retreated with respect to the mold unit 800. The injection unit 300 touches the mold unit 800, and fills the cavity space 801 inside the mold unit 800 with a molding material. For example, the injection unit 300 has a cylinder 310 that heats the molding material, a nozzle 320 provided in a front end portion of the cylinder 310, a screw 330 disposed to be freely advanced and retreated and rotatable inside the cylinder 310, a plasticizing motor 340 that rotates the screw 330, an injection motor 350 that advances and retreats the screw 330, and a load detector 360 that measures a load transmitted between the injection motor 350 and the screw 330.

The cylinder 310 heats the molding material supplied into the cylinder 310 from a feed port 311. For example, the molding material includes a resin. For example, the molding material is formed in a pellet shape, and is supplied to the feed port 311 in a solid state. The feed port 311 is formed in a rear portion of the cylinder 310. A cooler 312 such as a water-cooling cylinder is provided on an outer periphery of the rear portion of the cylinder 310. In front of the cooler 312, a heating unit 313 such as a band heater and a temperature measurer 314 are provided on an outer periphery of the cylinder 310.

The cylinder 310 is divided into a plurality of zones in the axial direction (for example, the X-axial direction) of the cylinder 310. The heating unit 313 and the temperature measurer 314 are provided in each of the plurality of zones. The control device 700 controls the heating unit 313 so that a set temperature is set in each of the plurality of zones and a measurement temperature of the temperature measurer 314 reaches the set temperature.

The nozzle 320 is provided in a front end portion of the cylinder 310, and is pressed against the mold unit 800. The heating unit 313 and the temperature measurer 314 are provided on the outer periphery of the nozzle 320. The control device 700 controls the heating unit 313 so that a measurement temperature of the nozzle 320 reaches the set temperature.

The screw 330 is disposed to be rotatable and to be freely advanced and retreated inside the cylinder 310. When the screw 330 is rotated, the molding material is fed forward along a helical groove of the screw 330. The molding material is gradually melted by heat from the cylinder 310 while being fed forward. As the liquid molding material is fed forward of the screw 330 and is accumulated in a front portion of the cylinder 310, the screw 330 is retreated. Thereafter, when the screw 330 is advanced, the liquid molding material accumulated in front of the screw 330 is injected from the nozzle 320, and fills the inside of the mold unit 800.

As a backflow prevention valve for preventing a backflow of the molding material fed rearward from the front of the screw 330 when the screw 330 is pressed forward, a backflow prevention ring 331 is attached to the front portion of the screw 330 to be freely advanced and retreated.

The backflow prevention ring 331 is pressed rearward by the pressure of the molding material in front of the screw 330 when the screw 330 is advanced, and is relatively retreated with respect to the screw 330 to a close position (refer to FIG. 2) for closing a flow path of the molding material. In this manner, the backflow of the molding material accumulated in front of the screw 330 is prevented.

On the other hand, the backflow prevention ring 331 is pressed forward by the pressure of the molding material fed forward along the helical groove of the screw 330 when the screw 330 is rotated, and is relatively advanced with respect to the screw 330 to an open position (refer to FIG. 1) for opening the flow path of the molding material. In this manner, the molding material is fed forward of the screw 330.

The backflow prevention ring 331 may be either a co-rotation type rotating together with the screw 330 or a non-co-rotation type that does not rotate together with the screw 330.

The injection unit 300 may have a drive source that advances and retreats the backflow prevention ring 331 with respect to the screw 330 between the open position and the close position.

The plasticizing motor 340 rotates the screw 330. The drive source for rotating the screw 330 is not limited to the plasticizing motor 340, and may be a hydraulic pump, for example.

The injection motor 350 advances and retreats the screw 330. A motion conversion mechanism that converts a rotary motion of the injection motor 350 into a linear motion of the screw 330 is provided between the injection motor 350 and the screw 330. For example, the motion conversion mechanism has a screw shaft and a screw nut screwed to the screw shaft. A ball or a roller may be provided between the screw shaft and the screw nut. The drive source that advances and retreats the screw 330 is not limited to the injection motor 350, and may be a hydraulic cylinder, for example.

The load detector 360 measures a load transmitted between the injection motor 350 and the screw 330. The detected load is converted into the pressure by the control device 700. The load detector 360 is provided in a load transmission channel between the injection motor 350 and the screw 330, and measures the load acting on the load detector 360.

The load detector 360 transmits a signal of the detected load to the control device 700. The load detected by the load detector 360 is converted into the pressure acting between the screw 330 and the molding material, and is used in controlling or monitoring the pressure received from the molding material by the screw 330, a back pressure against the screw 330, or the pressure acting on the molding material from the screw 330.

The pressure detector for measuring the pressure of the molding material is not limited to the load detector 360, and a general detector can be used. For example, a nozzle pressure sensor or a mold internal pressure sensor may be used. The nozzle pressure sensor is installed in the nozzle 320. The mold internal pressure sensor is installed inside the mold unit 800.

The injection unit 300 performs a plasticizing process, a filling process, and a holding pressure process under the control of the control device 700. The filling process and the holding pressure process may be collectively referred to as an injection process.

In the plasticizing process, the plasticizing motor 340 is driven to rotate the screw 330 at a set rotation speed, and the molding material is fed forward along the helical groove of the screw 330. As a result, the molding material is gradually melted. As the liquid molding material is fed forward of the screw 330 and is accumulated in a front portion of the cylinder 310, the screw 330 is retreated. For example, a rotation speed of the screw 330 is measured by using a plasticizing motor encoder 341. The plasticizing motor encoder 341 detects the rotation of the plasticizing motor 340, and transmits a signal indicating a detection result thereof to the control device 700. A screw rotational speed measurer for measuring the rotation speed of the screw 330 is not limited to the plasticizing motor encoder 341, and a general detector can be used.

In the plasticizing process, the injection motor 350 may be driven to apply a preset back pressure to the screw 330 in order to limit sudden retreat of the screw 330. The back pressure applied to the screw 330 is measured by using the load detector 360, for example. When the screw 330 is retreated to a plasticizing completion position and a predetermined amount of the molding material is accumulated in front of the screw 330, the plasticizing process is completed.

The position and the rotation speed of the screw 330 in the plasticizing process are collectively set as a series of setting conditions. For example, a plasticizing start position, a rotation speed switching position, and a plasticizing completion position are set. The positions are aligned in this order from the front side toward the rear side, and represent the start point and the end point of the section in which the rotation speed is set. The rotation speed is set for each section. The number of the rotation speed switching positions may be one or more. The rotation speed switching position may not be set. In addition, the back pressure is set for each section.

In the filling process, the injection motor 350 is driven to advance the screw 330 at a set movement speed, and the cavity space 801 inside the mold unit 800 is filled with the liquid molding material accumulated in front of the screw 330. The position or the movement speed of the screw 330 is detected by using an injection motor encoder 351, for example. The injection motor encoder 351 detects the rotation of the injection motor 350, and transmits a signal indicating a detection result thereof to the control device 700. When the position of the screw 330 reaches a set position, the filling process is switched to the holding pressure process (so-called V/P switching). The position where the V/P switching is performed will be referred to as a V/P switching position. The set movement speed of the screw 330 may be changed in accordance with the position or a time of the screw 330.

The position and the movement speed of the screw 330 in the filling process are collectively set as a series of setting conditions. For example, a filling start position (also referred to as an "injection start position"), the movement speed switching position, and the V/P switching position are set. The positions are aligned in this order from the rear side toward the front side, and represent the start point and the end point of the section in which the movement speed is set. The movement speed is set for each section. The number of the movement speed switching positions may be one or more. The movement speed switching position may not be set.

An upper limit value of the pressure of the screw 330 is set for each section in which the movement speed of the screw 330 is set. The pressure of the screw 330 is measured by the load detector 360. When the pressure of the screw 330 is equal to or lower than a setting pressure, the screw 330 is advanced at a set movement speed. On the other hand, when the pressure of the screw 330 exceeds the setting pressure, in order to protect the mold, the screw 330 is advanced at the movement speed lower than the set movement speed so that the pressure of the screw 330 is equal to or lower than the setting pressure.

After the position of the screw 330 reaches the V/P switching position in the filling process, the screw 330 may be temporarily stopped at the V/P switching position, and thereafter, the V/P switching may be performed. Immediately before the V/P switching, instead of stopping the screw 330, the screw 330 may be advanced at a low speed, or may be retreated at a low speed. In addition, a screw position detector for detecting the position of the screw 330 and a screw movement speed measurer for measuring the movement speed of the screw 330 are not limited to the injection motor encoder 351, and a general detector can be used.

In the holding pressure process, the injection motor 350 is driven to press the screw 330 forward. A pressure (hereinafter, also referred to as a "holding pressure") of the molding material in the front end portion of the screw 330 is held at a setting pressure, and the molding material remaining inside the cylinder 310 is pressed toward the mold unit 800. The molding material which is insufficient due to cooling shrinkage inside the mold unit 800 can be replenished. The holding pressure is measured by using the load detector 360, for example. A setting value of the holding pressure may be changed depending on an elapsed time from the start of the holding pressure process. The holding pressure and a holding time for holding the holding pressure in the holding pressure process may be respectively set, or may be collectively set as a series of setting conditions.

In the holding pressure process, the molding material in the cavity space 801 inside the mold unit 800 is gradually cooled, and when the holding pressure process is completed, an inlet of the cavity space 801 is closed by the solidified molding material. This state is referred to as gate seal, and prevents the backflow of the molding material from the cavity space 801. After the holding pressure process, a cooling process starts. In the cooling process, the molding material inside the cavity space 801 is solidified. In order to shorten a molding cycle time, the plasticizing process may be performed during the cooling process.

The injection unit 300 of the present embodiment is an in-line screw type, but may be a pre-plastic type. The injection unit of the pre-plastic type supplies the molding material melted inside a plasticizing cylinder to an injection cylinder, and the molding material is injected into the mold unit from the injection cylinder. Inside the plasticizing cylinder, the screw is disposed to be rotatable and not to be advanced and retreated, or the screw is disposed to be rotatable and to be freely advanced and retreated. On the other hand, a plunger is disposed to be freely advanced and retreated inside the injection cylinder.

In addition, the injection unit 300 of the present embodiment is a horizontal type in which the axial direction of the cylinder 310 is a horizontal direction, but may be a vertical type in which the axial direction of the cylinder 310 is an upward-downward direction. The mold clamping unit combined with the injection unit 300 of the vertical type may be the vertical type or the horizontal type. Similarly, the mold clamping unit combined with the injection unit 300 of the horizontal type may be the horizontal type or the vertical type.

### Moving Unit

In describing the moving unit 400, similarly to the description of the injection unit 300, a moving direction of the screw 330 during the filling (for example, the negative direction of the X-axis) will be defined as forward, and a moving direction of the screw 330 during the plasticizing (for example, the positive direction of the X-axis) will be defined as rearward.

The moving unit 400 advances and retreats the injection unit 300 with respect to the mold unit 800. The moving unit 400 presses the nozzle 320 against the mold unit 800, thereby generating a nozzle touch pressure. The moving unit 400 includes a hydraulic pump 410, a motor 420 serving as a drive source, and a hydraulic cylinder 430 serving as a hydraulic actuator.

The hydraulic pump 410 has a first port 411 and a second port 412. The hydraulic pump 410 is a pump that can rotate in both directions, and switches rotation directions of the motor 420. In this manner, a hydraulic fluid (for example, oil) is sucked from any one of the first port 411 and the second port 412, and is discharged from the other to generate a hydraulic pressure. The hydraulic pump 410 can suck the hydraulic fluid from a tank, and can discharge the hydraulic fluid from any one of the first port 411 and the second port 412.

The motor 420 operates the hydraulic pump 410. The motor 420 drives the hydraulic pump 410 in a rotation direction and with a rotation torque in accordance with a control signal transmitted from the control device 700. The motor 420 may be an electric motor, or may be an electric servo motor.

The hydraulic cylinder 430 has a cylinder body 431, a piston 432, and a piston rod 433. The cylinder body 431 is fixed to the injection unit 300. The piston 432 partitions the inside of the cylinder body 431 into a front chamber 435 serving as a first chamber and a rear chamber 436 serving as a second chamber. The piston rod 433 is fixed to the stationary platen 110.

The front chamber 435 of the hydraulic cylinder 430 is connected to the first port 411 of the hydraulic pump 410 via a first flow path 401. The hydraulic fluid discharged from the first port 411 is supplied to the front chamber 435 via the first flow path 401. In this manner, the injection unit 300 is pressed forward. The injection unit 300 is advanced, and the nozzle 320 is pressed against the stationary die 810. The front chamber 435 functions as a pressure chamber that generates the nozzle touch pressure of the nozzle 320 by the pressure of the hydraulic fluid supplied from the hydraulic pump 410.

On the other hand, the rear chamber 436 of the hydraulic cylinder 430 is connected to the second port 412 of the hydraulic pump 410 via a second flow path 402. The hydraulic fluid discharged from the second port 412 is supplied to the rear chamber 436 of the hydraulic cylinder 430 via the second flow path 402. In this manner, the injection unit 300 is pressed rearward. The injection unit 300 is retreated, and the nozzle 320 is separated from the stationary die 810.

In the present embodiment, the moving unit 400 includes the hydraulic cylinder 430, but the present invention is not limited thereto. For example, instead of the hydraulic cylinder 430, an electric motor and a motion conversion mechanism that converts a rotary motion of the electric motor into a linear motion of the injection unit 300 may be used.

### Control Device

For example, the control device 700 is configured to include a computer, and has a central processing unit (CPU) 701, a storage medium 702 such as a memory, an input interface 703, and an output interface 704 as illustrated in FIGS. 1 and 2. The control device 700 performs various types of control by causing the CPU 701 to execute a program stored in the storage medium 702. In addition, the control device 700 receives a signal from the outside through the input interface 703, and transmits the signal to the outside through the output interface 704.

The control device 700 repeatedly performs the plasticizing process, the mold closing process, the pressurizing process, the mold clamping process, the filling process, the holding pressure process, the cooling process, the depressurizing process, the mold opening process, and the ejection process, thereby repeatedly manufacturing the molding product. A series of operations for obtaining the molding product, for example, an operation from the start of the plasticizing process to the start of the subsequent plasticizing process will be referred to as a "shot" or a "molding cycle". In addition, a time required for one shot will be referred to as a "molding cycle time" or a "cycle time".

For example, in one molding cycle, the plasticizing process, the mold closing process, the pressurizing process, the mold clamping process, the filling process, the holding pressure process, the cooling process, the depressurizing process, the mold opening process, and the ejection process are performed in this order. The order described here is the order of the start times of the respective processes. The filling process, the holding pressure process, and the cooling process are performed during the mold clamping process. The start of the mold clamping process may coincide with the start of the filling process. The completion of the depressurizing process coincides with the start of the mold opening process.

A plurality of processes may be performed at the same time in order to shorten the molding cycle time. For example, the plasticizing process may be performed during the cooling process of the previous molding cycle or may be performed during the mold clamping process. In this case, the mold closing process may be performed in an initial stage of the molding cycle. In addition, the filling process may start during the mold closing process. In addition, the ejection process may start during the mold opening process. When an on-off valve for opening and closing the flow path of the nozzle 320 is provided, the mold opening process may start during the plasticizing process. The reason is as follows. Even when the mold opening process starts during the plasticizing process, when the on-off valve closes the flow path of the nozzle 320, the molding material does not leak from the nozzle 320.

One molding cycle may include a process other than the plasticizing process, the mold closing process, the pressurizing process, the mold clamping process, the filling process, the holding pressure process, the cooling process, the depressurizing process, the mold opening process, and the ejection process.

For example, after the holding pressure process is completed and before the plasticizing process starts, a pre-plasticizing suck-back process of retreating the screw 330 to a preset plasticizing start position may be performed. The pressure of the molding material accumulated in front of the screw 330 before the plasticizing process starts can be reduced, and it is possible to prevent the screw 330 from being rapidly retreated when the plasticizing process starts.

In addition, after the plasticizing process is completed and before the filling process starts, a post-plasticizing suck-back process may be performed in which the screw 330 is retreated to a preset filling start position (also referred to as an "injection start position") . The pressure of the molding material accumulated in front of the screw 330 before the filling process starts can be reduced, and can prevent a leakage of the molding material from the nozzle 320 before the filling process starts.

The control device 700 is connected to an operation unit 750 that receives an input operation of a user, and a display unit 760 that displays a screen. For example, the operation unit 750 and the display unit 760 may be configured to include a touch panel 770, and may be integrated with each other. The touch panel 770 serving as the display unit 760 displays the screen under the control of the control device 700. For example, the screen of the touch panel 770 may display settings of the injection molding machine 10, and information on a current state of the injection molding machine 10. In addition, for example, the screen of the touch panel 770 may display a button for receiving the input operation of the user or an operation unit such as an input column. The touch panel 770 serving as the operation unit 750 detects an input operation of the user on the screen, and outputs a signal corresponding to the input operation to the control device 700. In this manner, for example, while confirming information displayed on the screen, the user can perform settings (including an input of a setting value) of the injection molding machine 10 by operating the operation unit provided on the screen. In addition, the user can operate the injection molding machine 10 corresponding to the operation unit by operating the operation unit provided on the screen. For example, the operation of the injection molding machine 10 may be the operation (including stopping) of the mold clamping unit 100, the ejector unit 200, the injection unit 300, and the moving unit 400. In addition, the operation of the injection molding machine 10 may be switching between the screens displayed on the touch panel 770 serving as the display unit 760.

A case has been described in which the operation unit 750 and the display unit 760 of the present embodiment are integrated with each other as the touch panel 770. However, both of these may be independently provided. In addition, a plurality of the operation units 750 may be provided. The operation unit 750 and the display unit 760 are disposed on the operation side (negative direction of the Y-axis) of the mold clamping unit 100 (more specifically, the stationary platen 110).

### Details of Injection Unit

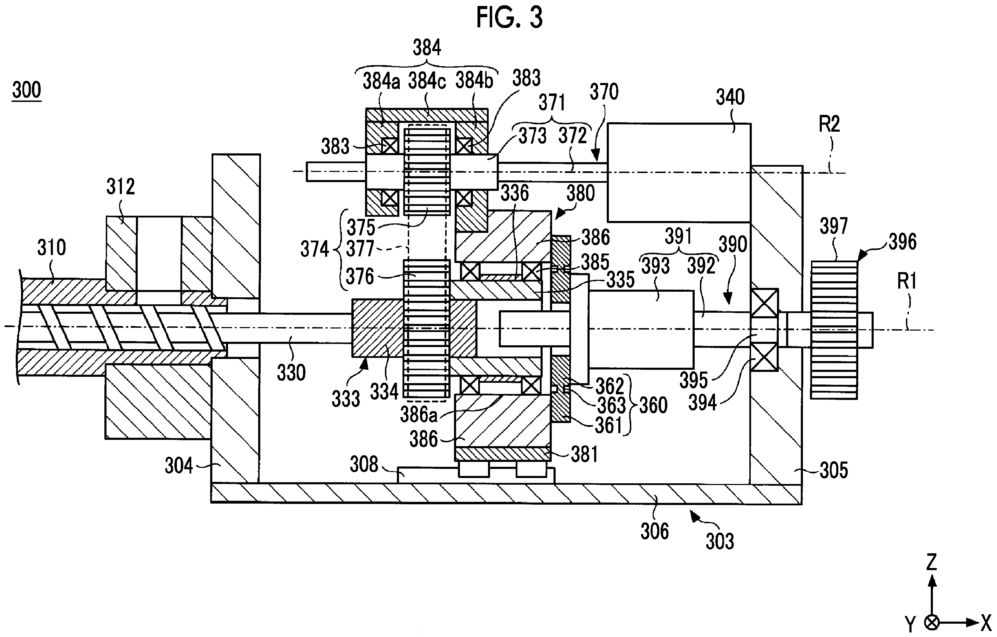

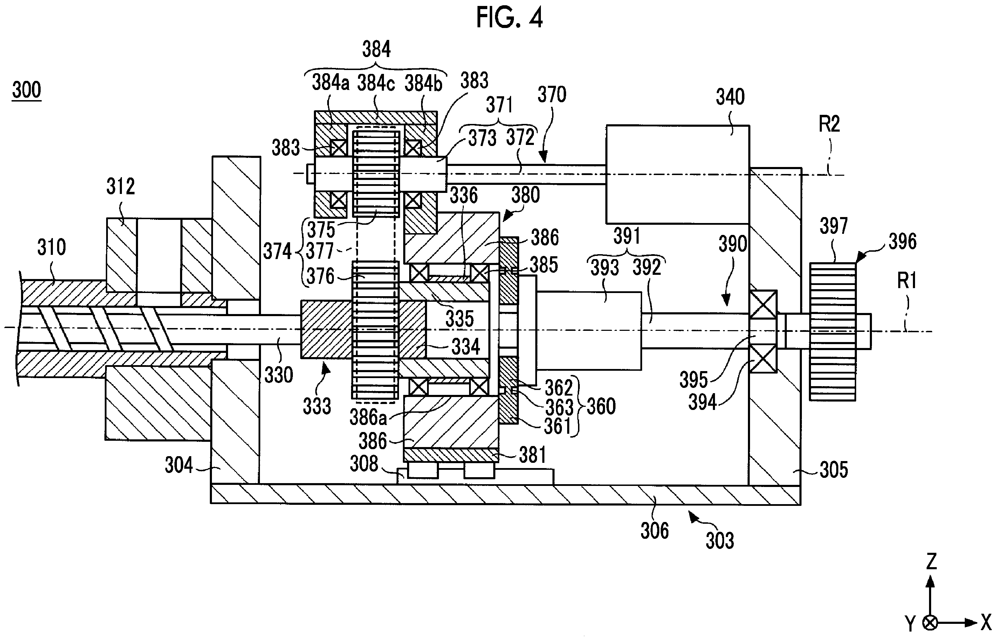

FIG. 3 is a sectional view illustrating a state when filling starts in the injection unit according to the embodiment. FIG. 4 is a sectional view illustrating a state when the filling is completed in the injection unit according to the embodiment. As described above, in describing the injection unit 300, a moving direction of the screw 330 during the filling (for example, a negative direction of the X-axis) will be defined as forward, and a moving direction of the screw 330 during the plasticizing (for example, a positive direction of the X-axis) will be defined as rearward.

The injection unit 300 includes a cylinder 310 that heats a molding material, a screw 330 provided to be rotatable and freely advanced and retreated inside the cylinder 310, a plasticizing motor 340 that rotates the screw 330, an injection motor 350 (refer to FIGS. 1 and 2) that advances and retreats the screw 330, a load detector 360 that measures a load transmitted between the screw 330 and the injection motor 350, and a rotation transmission mechanism 370 that transmits a rotation force (torque) of the plasticizing motor 340 to the screw 330 and allows the screw 330 to be advanced and retreated with respect to the plasticizing motor 340.

The injection unit 300 includes an injection frame 303 to which the cylinder 310 is fixed. For example, the injection frame 303 includes a front support 304 to which the cylinder 310 is attached, a rear support 305 provided behind the front support 304, and a base 306 that supports the front support 304 and the rear support 305. The front support 304 and the rear support 305 are fixed onto the base 306. The base 306 is fixed to the slide base 301 (refer to FIGS. 1 and 2). The base 306 may be a portion of the slide base 301.

The plasticizing motor 340 is fixed to the injection frame 303. The plasticizing motor 340 is attached to the rear support 305 in FIGS. 3 and 4, but may be attached to the front support 304 or the base 306. In addition, although not illustrated, the injection motor 350 is also fixed to the injection frame 303. For example, the injection motor 350 is attached to the base 306.

As described above, the plasticizing motor 340 is fixed to the injection frame 303. Therefore, when the injection motor 350 advances and retreats the screw 330, a drive target to be advanced and retreated by the injection motor 350 does not include the plasticizing motor 340. Therefore, an inertia of the drive target of the injection motor 350 is small, and the acceleration/deceleration of the screw 330 is fast.

The rotation transmission mechanism 370 transmits the rotation force of the plasticizing motor 340 to the screw 330, and allows the screw 330 to be advanced and retreated with respect to the plasticizing motor 340. Specifically, the rotation transmission mechanism 370 includes a spline 371. The spline 371 includes a spline shaft 372 and a spline nut 373 that transmits the rotation force between to the spline shaft 372 and relatively moves in the axial direction of the spline shaft 372. External teeth formed on the outer periphery of the spline shaft 372 and internal teeth formed on the inner periphery of the spline nut 373 mesh with each other. A ball or a roller may be interposed between the spline shaft 372 and the spline nut 373.

For example, as illustrated in FIGS. 3 and 4, the spline shaft 372 is fixed to a rotor of the plasticizing motor 340, and the spline nut 373 is advanced and retreated together with the screw 330. The spline 371 can transmit the rotation force of the plasticizing motor 340 to the screw 330, and can advance and retreat the screw 330 in a state where the plasticizing motor 340 is fixed to the screw 330.

A rotation center line R1 of the screw 330 and a rotation center line R2 of the spline 371 are shifted in parallel. That is, the rotation center lines R1 and R2 are parallel, and are shifted in directions perpendicular to the respective axial directions. For example, the rotation center lines R1 and R2 are horizontal, and the rotation center line R2 is shifted upward of the rotation center line R1.

The rotation center line R1 of the screw 330 and the rotation center line R2 of the spline 371 are shifted in parallel. In this manner, the number of components disposed on the same straight line as the rotation center line R1 of the screw 330 can be reduced, and an access to each of the components can be improved. In addition, the rotation center line R1 of the screw 330 and the rotation center line R2 of the spline 371 are shifted in parallel. In this manner, many components may not be packed inside the rotor of the plasticizing motor 340. Accordingly, the plasticizing motor 340 can be miniaturized, and cost of the plasticizing motor 340 can be reduced. In addition, the rotation center line R1 of the screw 330 and the rotation center line R2 of the spline 371 are shifted in parallel. In this manner, a transmission 374 (to be described later) can be installed.

The rotation transmission mechanism 370 includes the transmission 374 that changes and transmits the rotation speed from the spline 371 to the extension shaft 333 of the screw 330. For example, the transmission 374 is a speed reducer, and reduces and transmits the rotation speed from the spline 371 to the extension shaft 333 of the screw 330. A rotation force (torque) proportional to a reduction ratio of the speed reducer can be obtained, and the plasticizing motor 340 can be miniaturized.

For example, the transmission 374 includes a driving pulley 375 fixed to the spline 371, a driven pulley 376 fixed to the extension shaft 333 of the screw 330, and a belt 377 laid between the driving pulley 375 and the driven pulley 376. For example, the driving pulley 375 is fixed to the spline shaft 372. For example, the belt 377 is an endless belt. When the transmission 374 is the speed reducer, a radius of the driven pulley 376 is larger than a radius of the driving pulley 375. A value obtained by dividing the radius of the driven pulley 376 by the radius of the driving pulley 375 is the reduction ratio.

Although not illustrated, the transmission 374 may include a driving gear fixed to the spline 371 and a driven gear fixed to the extension shaft 333 of the screw 330. The driving gear and the driven gear mesh with each other to transmit the rotation force. When the transmission 374 is the speed reducer, the radius of the driven gear is larger than the radius of the driving gear. A value obtained by dividing the radius of the driven gear by the radius of the driving gear is the reduction ratio. An intermediate gear may be provided between the driving gear and the driven gear.

For example, the injection unit 300 may include a linear motion unit 380 freely advanced and retreated with respect to the injection frame 303, an injection motor 350 that advances and retreats the screw 330 via the linear motion unit 380, and a motion conversion mechanism 390 that converts a rotary motion of the injection motor 350 into a linear motion of the linear motion unit 380.

For example, the linear motion unit 380 is provided between the front support 304 and the rear support 305. The linear motion unit 380 is advanced and retreated in the X-axial direction along the guide rail 308 fixed onto the base 306. The guide rail 308 restricts the rotation of the linear motion unit 380 so that the linear motion unit 380 is not rotated by the rotation force of the plasticizing motor 340. For example, the linear motion unit 380 includes a slider 381 advanced and retreated in the X-axial direction along the guide rail 308.

Although not illustrated, the linear motion unit 380 may be advanced and retreated in the X-axial direction along a guide bar laid between the front support 304 and the rear support 305. In this case, the guide bar also restricts the rotation of the linear motion unit 380 so that the linear motion unit 380 is not rotated by the rotation force of the plasticizing motor 340.

The linear motion unit 380 includes a first bearing holder 384 that holds a first bearing 383 for supporting the spline 371 to be rotatable, and a second bearing holder 386 that holds a second bearing 385 for supporting the screw 330 to be rotatable. The first bearing 383 can prevent transmission of the rotation force from the spline 371 to the linear motion unit 380. In addition, the second bearing 385 can prevent transmission of the rotation force from the screw 330 to the linear motion unit 380. In addition, the first bearing 383 and the second bearing 385 are separately provided. Accordingly, a difference in the rotation speed between the spline 371 and the screw 330 can be made.

For example, the first bearing 383 supports the spline nut 373 to be rotatable. For example, the first bearings 383 are provided across the belt 377 on both sides (both front side and rear side) of the spline nut 373 in the axial direction. Inclination of the spline nut 373 which is caused by tension of the belt 377 can be suppressed, compared to a case where the first bearing 383 is provided on only one side of the belt 377.

The first bearing holder 384 includes a front holder 384a that holds the first bearing 383 in front of the belt 377, a rear holder 384b that holds the first bearing 383 behind the belt 377, and a connecting portion 384c that connects the front holder 384a and the rear holder 384b. When the first bearing 383 is provided on only one side of the belt 377, the first bearing holder 384 may include only one of the front holder 384a and the rear holder 384b.

For example, the second bearing 385 supports the screw 330 to be rotatable, thereby supporting the extension shaft 333 of the screw 330 to be rotatable. A plurality of the second bearings 385 may be provided at an interval along the extension shaft 333. An inner ring spacer 336 that presses an inner ring of the second bearing 385 is provided between the second bearings 385 adjacent to each other. The inner ring spacer 336 is fixed to an outer periphery of the extension shaft 333.

For example, the extension shaft 333 of the screw 330 includes an attachment portion 334 to which the rear end of the screw 330 is attached, and a rotating portion 335 supported to be rotatable by the second bearing 385. Not only the screw 330 but also the driven pulley 376 or the driven gear may be attached to the attachment portion 334. For example, the rotating portion 335 is a hollow shaft. When the rotating portion 335 is the hollow shaft, a front end portion of the ball screw shaft 392 of the motion conversion mechanism 390 can be accommodated inside the rotating portion 335, as illustrated in FIG. 3. For example, when the rotating portion 335 is retreated, the front end portion of the ball screw shaft 392 may be inserted into the rotating portion 335. Compared to a case where the rotating portion 335 is a solid shaft, an interval between the ball screw nut 393 and the rotating portion 335 can be shortened, and a dimension of the injection unit 300 in the X-axial direction can be shortened.

The second bearing holder 386 is fixed to the slider 381. The second bearing holder 386 includes an insertion hole 386a into which the extension shaft 333 of the screw 330 is inserted. The rotating portion 335 of the extension shaft 333 is disposed in the insertion hole 386a. The rotating portion 335 is disposed inside the insertion hole 386a not to interfere with the load detector 360.

For example, the motion conversion mechanism 390 includes a ball screw 391. The ball screw 391 includes a ball screw shaft 392 and a ball screw nut 393 screwed to the ball screw shaft 392. The ball screw nut 393 is fixed to the linear motion unit 380 via the load detector 360.

On the other hand, the ball screw shaft 392 is attached to the injection frame 303 via a bearing 394 that supports the ball screw shaft 392 to be rotatable. For example, an outer ring of the bearing 394 is fixed to the rear support 305 of the injection frame 303, and an inner ring of the bearing 394 is fitted into a groove 395 of the ball screw shaft 392.

The ball screw shaft 392 is ejected rearward from the rear support 305 of the injection frame 303. For example, a rotation transmission mechanism 396 that transmits the rotation force of the injection motor 350 to the ball screw 391 is provided in a rear end portion of the ball screw shaft 392.

For example, the rotation transmission mechanism 396 includes a driving pulley fixed to an output shaft of the injection motor 350, a driven pulley 397 fixed to the rear end portion of the ball screw shaft 392, and a belt laid between the driving pulley and the driven pulley 397. The rotation transmission mechanism 396 may include a driving gear and a driven gear, instead of the driving pulley, the driven pulley 397, and the belt.

The rotation transmission mechanism 396 may not be provided, and the output shaft of the injection motor 350 and the ball screw shaft 392 may be disposed on the same straight line R1 to be directly connected to each other.

When the control device 700 operates the injection motor 350, the ball screw shaft 392 is rotated, and the ball screw nut 393 is advanced and retreated in the X-axial direction. As a result, the linear motion unit 380 and the screw 330 are advanced and retreated in the X-axial direction.

The load detector 360 measures a load transmitted between the injection motor 350 and the screw 330. For example, the load detector 360 is provided between the ball screw nut 393 and the linear motion unit 380. Since the load detector 360 is provided, it is possible to measure a pressure received from the molding material by the screw 330, a back pressure acting on the screw 330, a pressure acting on the molding material from the screw 330.

For example, the load detector 360 is a ring type, and includes an outer peripheral ring 361, an inner peripheral ring 362 disposed inside the outer peripheral ring 361 in the radial direction, and a strain element 363 that connects the outer peripheral ring 361 and the inner peripheral ring 362. The load detector 360 detects a shear strain of the strain element 363, and transmits an electric signal corresponding to a magnitude of the shear strain to the control device 700.

For example, the outer peripheral ring 361 of the load detector 360 is fixed to a rear end surface of the second bearing holder 386 of the linear motion unit 380. On the other hand, the inner peripheral ring 362 of the load detector 360 is fixed to a front end surface of the ball screw nut 393. The load detector 360 is not limited to the ring type, and may be a compression type, for example.

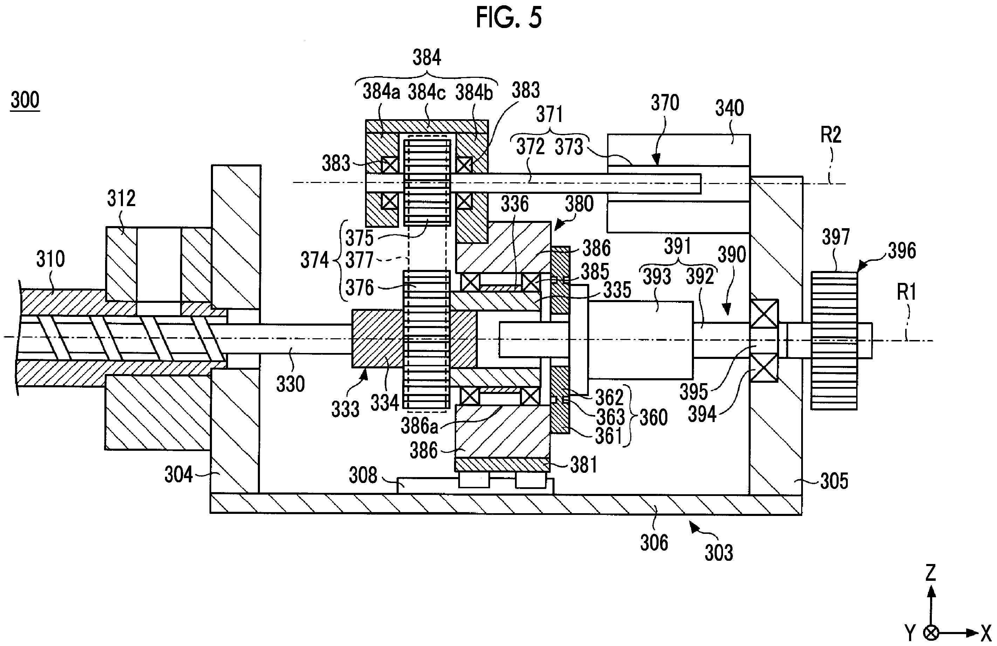

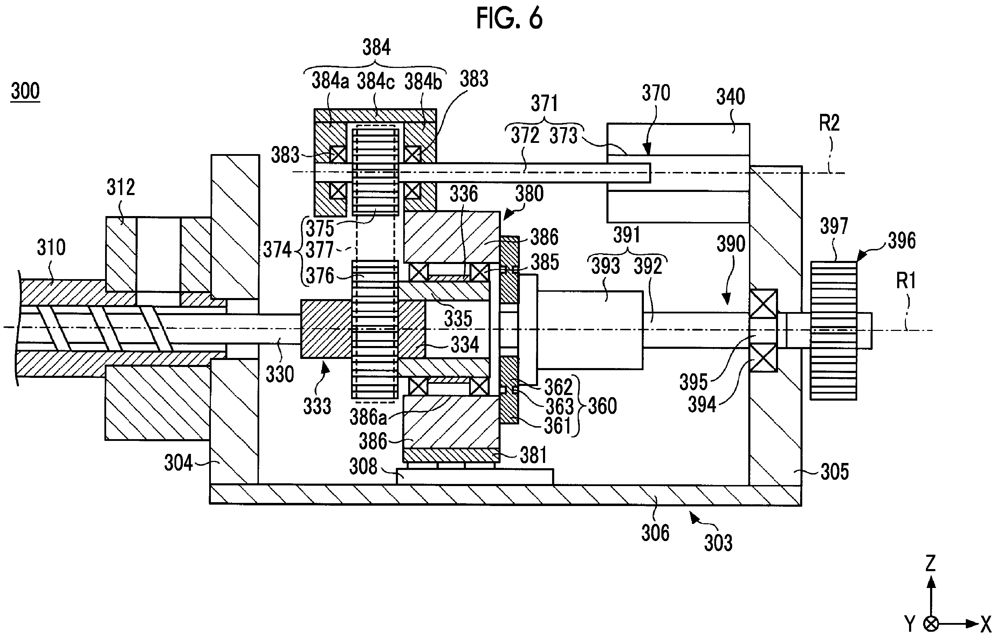

Next, the injection unit 300 according to a first modification example will be described with reference to FIGS. 5 and 6. FIG. 5 is a sectional view illustrating a state when filling starts in the injection unit according to the first modification example. FIG. 6 is a sectional view illustrating a state when the filling is completed in the injection unit according to the first modification example. Hereinafter, different points between the first modification example and the above-described embodiment will be mainly described.

As illustrated in FIGS. 5 and 6, the spline nut 373 may be fixed to the rotor of the plasticizing motor 340, and the spline shaft 372 may be advanced and retreated together with the screw 330. In this case, the spline 371 can also transmit the rotation force of the plasticizing motor 340 to the screw 330, and the screw 330 can be advanced and retreated in a state where the plasticizing motor 340 is fixed to the screw 330.

In the present modification example, as in the above-described embodiment, the rotation center line R1 of the screw 330 and the rotation center line R2 of the spline 371 are also shifted in parallel. Therefore, the number of components disposed on the same straight line as the rotation center line R1 of the screw 330 can be reduced, and an access to each of the components can be improved. In addition, many components may not be packed inside the rotor of the plasticizing motor 340. Accordingly, the plasticizing motor 340 can be miniaturized, and cost of the plasticizing motor 340 can be reduced. In addition, the transmission 374 can be installed.

The rotation transmission mechanism 370 includes the transmission 374 that changes and transmits the rotation speed from the spline 371 to the extension shaft 333 of the screw 330. The driving pulley 375 of the transmission 374 is fixed to the spline nut 373 in the above-described embodiment, but is fixed to the spline shaft 372 in the present modification example. In this case, the rotation speed can be changed and transmitted from the spline 371 to the extension shaft 333 of the screw 330.

The first bearing 383 supports the spline nut 373 to be rotatable in the above-described embodiment, but supports the spline shaft 372 to be rotatable in the present modification example. For example, the first bearings 383 are provided across the belt 377 on both sides (both front side and rear side) of the spline shaft 372 in the axial direction. Inclination of the spline nut 373 which is caused by tension of the belt 377 can be suppressed, compared to a case where the first bearing 383 is provided on only one side of the belt 377.

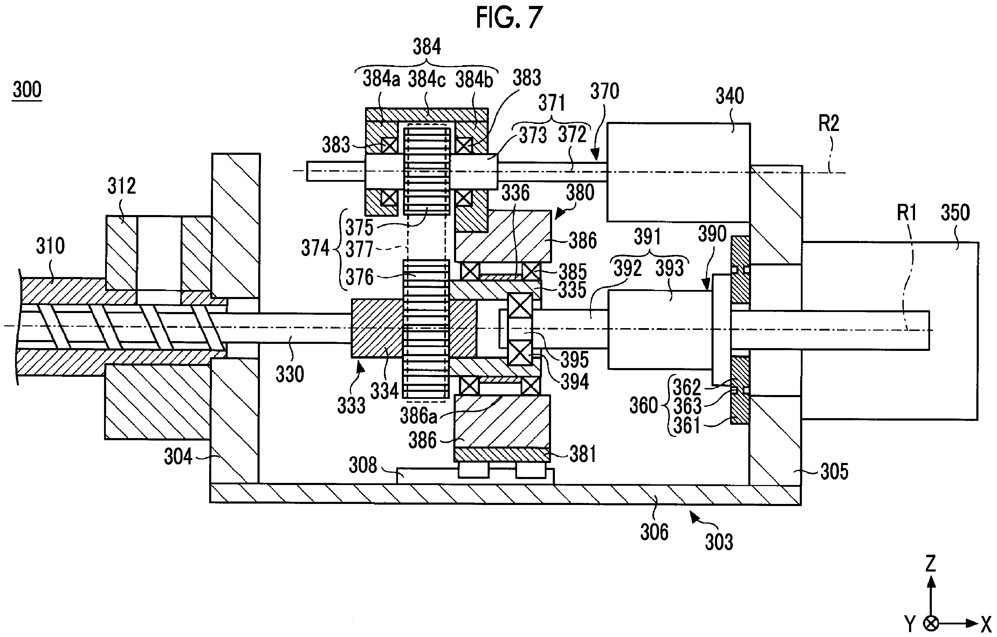

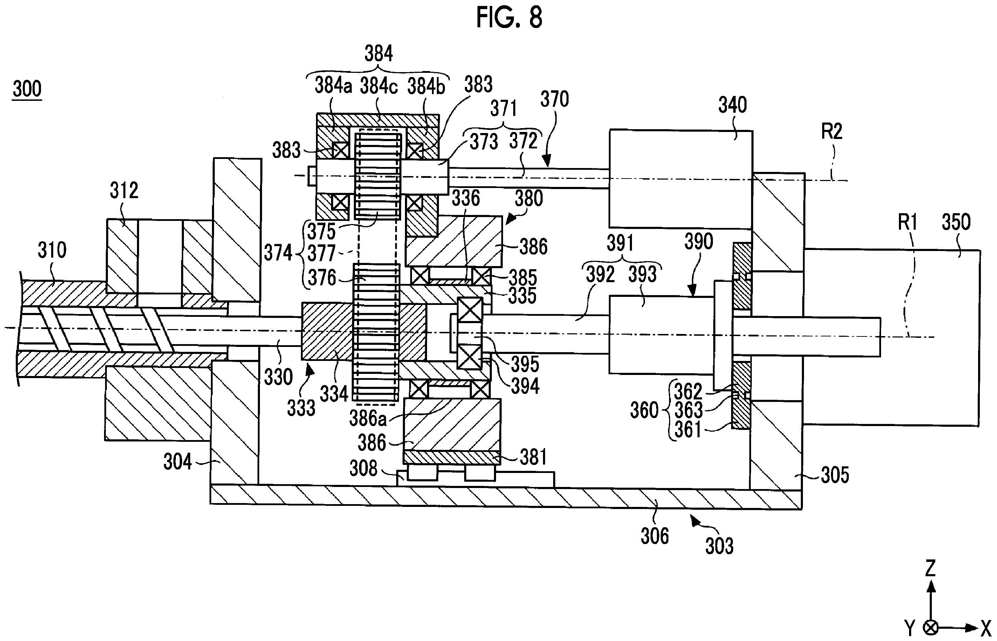

Next, the injection unit 300 according to a second modification example will be described with reference to FIGS. 7 and 8. FIG. 7 is a sectional view illustrating a state when filling starts in the injection unit according to the second modification example. FIG. 8 is a sectional view illustrating a state when the filling is completed in the injection unit according to the second modification example. Hereinafter, different points between the second modification example and the above-described embodiment will be mainly described.

For example, the motion conversion mechanism 390 includes a ball screw 391. The ball screw 391 includes a ball screw shaft 392 and a ball screw nut 393 screwed to the ball screw shaft 392. For example, the ball screw nut 393 is fixed to the rear support 305 of the injection frame 303 via the load detector 360.

For example, the rear end portion of the ball screw shaft 392 is spline-coupled to the rotor of the injection motor 350. The rotation center line of the ball screw shaft 392 and the rotation center line of the injection motor 350 are disposed on the same straight line R1. For example, the injection motor 350 is fixed to the rear support 305 of the injection frame 303.

The rotation center line of the ball screw shaft 392 and the rotation center line of the injection motor 350 are disposed on the same straight line R1 in the present modification example, but both of these may be disposed to be shifted in parallel. In the latter case, the output shaft of the injection motor 350 and the spline nut are connected by a pulley and a belt, and the spline nut and the spline shaft provided in the rear end of the ball screw shaft 392 are fitted to each other.

On the other hand, the front end portion of the ball screw shaft 392 is attached to the rotating portion 335 via the bearing 394 that supports a front end portion thereof to be rotatable. For example, the rotating portion 335 is a hollow shaft. The outer ring of the bearing 394 is fixed to the rotating portion 335, and the inner ring of the bearing 394 is fitted into the groove 395 of the ball screw shaft 392.

When the control device 700 operates the injection motor 350, the ball screw shaft 392 is advanced and retreated while being rotated. As a result, the linear motion unit 380 and the screw 330 are advanced and retreated.

For example, the load detector 360 is provided in front of the rear support 305 of the injection frame 303. In this case, the outer peripheral ring 361 of the load detector 360 is fixed to the front end surface of the rear support 305 of the injection frame 303, and the inner peripheral ring 362 of the load detector 360 is fixed to the rear end surface of the ball screw nut 393.

The load detector 360 may be provided behind the rear support 305 of the injection frame 303. In this case, the outer peripheral ring 361 of the load detector 360 is fixed to the rear end surface of the rear support 305 of the injection frame 303, and the inner peripheral ring 362 of the load detector 360 is fixed to the rear end surface of the ball screw nut 393. In addition, in this case, the injection motor 350 is fixed to the rear support 305 via the outer peripheral ring 361 of the load detector 360.

Hitherto, the embodiments of the injection molding machine according to the present invention have been described. However, the present invention is not limited to the above-described embodiments. Various modifications, corrections, substitutions, additions, deletions, and combinations can be made within the scope of the appended claims.

### Brief Description of the Reference Symbols

- 10:: injection molding machine
- 303:: injection frame
- 310:: cylinder
- 330:: screw
- 340:: plasticizing motor
- 370:: rotation transmission mechanism
- 371:: spline

## Claims

1. An injection molding machine (10) comprising:
a cylinder (310) configured to heat a molding material;
a screw (330) provided to be rotatable and freely advanced and retreated inside the cylinder (310);
a plasticizing motor (340) configured to rotate the screw (330);
a rotation transmission mechanism (370) configured to transmit a rotation force of the plasticizing motor (340) to the screw (330); and
an injection frame (303) to which the cylinder (310) is fixed; and
the plasticizing motor (340) is fixed to the injection frame (303),
the rotation transmission mechanism (370) includes a spline (371),
a rotation center line (R1) of the screw (330) and a rotation center line (R2) of the spline (371) are shifted in parallel,
**characterized in that**
the spline (371) includes a spline shaft (372) and a spline nut (373) configured to transmit the rotation force to the spline shaft (372) and relatively move in an axial direction of the spline shaft (372),
the spline shaft (372) is fixed to a rotor of the plasticizing motor (340), and
the spline nut (373) is advanced and retreated together with the screw (330) with respect to the plasticizing motor (340).

2. An injection molding machine (10) comprising:
a cylinder (310) configured to heat a molding material;
a screw (330) provided to be rotatable and freely advanced and retreated inside the cylinder (310);
a plasticizing motor (340) configured to rotate the screw (330);
a rotation transmission mechanism (370) configured to transmit a rotation force of the plasticizing motor (340) to the screw (330); and
an injection frame (303) to which the cylinder (310) is fixed; and
the plasticizing motor (340) is fixed to the injection frame (303),
the rotation transmission mechanism (370) includes a spline (371),
a rotation center line (R1) of the screw (330) and a rotation center line (R2) of the spline (371) are shifted in parallel,
**characterized in that**
the spline (371) includes a spline shaft (372) and a spline nut (373) configured to transmit the rotation force to the spline shaft (372) and relatively move in an axial direction of the spline shaft (372),
the spline nut (373) is fixed to a rotor of the plasticizing motor (340), and
the spline shaft (372) is advanced and retreated together with the screw (330) with respect to the plasticizing motor (340).

3. The injection molding machine (10) according to claim 1 or 2,
wherein the rotation transmission mechanism (370) includes a transmission (374) configured to change and transmit a rotation speed from the spline (371) to an extension shaft (333) of the screw (330).

4. The injection molding machine (10) according to claim 3,
wherein the transmission (374) includes a driving pulley (375) fixed to the spline (371), a driven pulley (397) fixed to the extension shaft (333) of the screw (330), and a belt (377) laid between the driving pulley (375) and the driven pulley (397).

5. The injection molding machine (10) according to any one of claims 1 to 4, further comprising:
a linear motion unit (380) freely advanced and retreated with respect to the injection frame (303);
an injection motor (350) configured to advance and retreat the screw (330) via the linear motion unit (380); and
a motion conversion mechanism (390) configured to convert a rotary motion of the injection motor (350) into a linear motion of the linear motion unit (380),
wherein the linear motion unit (380) includes a first bearing holder (384) configured to hold a first bearing (383) for supporting the spline (371) to be rotatable, and a second bearing holder (386) configured to hold a second bearing (385) for supporting the screw (330) to be rotatable.

6. The injection molding machine (10) according to claim 5, further comprising:
a load detector (360) configured to measure a load transmitted between the injection motor (350) and the screw (330),
wherein the motion conversion mechanism (390) includes a ball screw (391),
the ball screw (391) includes a ball screw shaft (392) and a ball screw nut (393) screwed to the ball screw shaft (392), and
the ball screw nut (393) is fixed to the linear motion unit (380) via the load detector (360).

7. The injection molding machine (10) according to claim 5, further comprising:
a load detector (360) configured to measure a load transmitted between the injection motor (350) and the screw (330),
wherein the motion conversion mechanism (390) includes a ball screw (391),
the ball screw (391) includes a ball screw shaft (392) and a ball screw nut (393) screwed to the ball screw shaft (392), and
the ball screw nut (393) is fixed to the injection frame (303) via the load detector (360).

## Patentansprüche

1. Spritzgießmaschine (10), umfassend:
einen Zylinder (310), der konfiguriert ist, ein Formmaterial zu erwärmen;
eine Schnecke (330), die vorgesehen ist, im Inneren des Zylinders (310) drehbar und frei vor- und zurückbewegbarbar zu sein;
einen Plastifiziermotor (340), der konfiguriert ist, die Schnecke (330) zu drehen;
einen Drehübertragungsmechanismus (370), der konfiguriert ist, eine Drehkraft des Plastifiziermotors (340) auf die Schnecke (330) zu übertragen; und
einen Einspritzrahmen (303), an dem der Zylinder (310) befestigt ist, und
der Plastifiziermotor (340) an dem Einspritzrahmen (303) befestigt ist,
der Drehübertragungsmechanismus (370) eine Verzahnung (371) umfasst,
eine Drehmittellinie (R1) der Schnecke (330) und eine Drehmittellinie (R2) der Verzahnung (371) parallel verschoben sind,
**dadurch gekennzeichnet, dass**
die Verzahnung (371) eine Keilwelle (372) und eine Keilwellenbuchse (373) umfasst, die so konfiguriert ist, dass sie die Drehkraft auf die Keilwelle (372) überträgt und sich relativ in einer Axialrichtung der Keilwelle (372) bewegt,
die Keilwelle (372) an einem Rotor des Plastifiziermotors (340) befestigt ist, und
die Keilwellenbuchse (373) zusammen mit der Schnecke (330) in Bezug auf den Plastifiziermotor (340) vor- und zurückbewegt wird.

2. Spritzgießmaschine (10), umfassend:
einen Zylinder (310), der konfiguriert ist, ein Formmaterial zu erwärmen;
eine Schnecke (330), die vorgesehen ist, im Inneren des Zylinders (310) drehbar und frei vor- und zurückbewegbar zu sein;
einen Plastifiziermotor (340), der konfiguriert ist, die Schnecke (330) zu drehen;
einen Drehübertragungsmechanismus (370), der konfiguriert ist, um eine Drehkraft des Plastifiziermotors (340) auf die Schnecke (330) zu übertragen; und
einen Einspritzrahmen (303), an dem der Zylinder (310) befestigt ist, und
der Plastifiziermotor (340) an dem Einspritzrahmen (303) befestigt ist,
der Drehübertragungsmechanismus (370) eine Verzahnung (371) umfasst,
eine Drehmittellinie (R1) der Schnecke (330) und eine Drehmittellinie (R2) der Verzahnung (371) parallel verschoben sind,
**dadurch gekennzeichnet, dass**
die Verzahnung (371) eine Keilwelle (372) und eine Keilwellenbuchse (373) umfasst, die so konfiguriert ist, dass sie die Drehkraft auf die Keilwelle (372) überträgt und sich relativ in einer Axialrichtung der Keilwelle (372) bewegt,
die Keilwellenbuchse (373) an einem Rotor des Plastifiziermotors (340) befestigt ist, und
die Keilwelle (372) zusammen mit der Schnecke (330) in Bezug auf den Plastifiziermotor (340) vor- und zurückbewegt wird.

3. Spritzgießmaschine (10) nach Anspruch 1 oder 2,
wobei der Drehübertragungsmechanismus (370) ein Getriebe (374) umfasst, das so konfiguriert ist, dass es eine Drehgeschwindigkeit von der Verzahnung (371) auf eine Verlängerungswelle (333) der Schnecke (330) ändert und überträgt.

4. Spritzgießmaschine (10) nach Anspruch 3,
wobei das Getriebe (374) eine an der Verzahnung (371) befestigte Antriebsscheibe (375), eine an der Verlängerungswelle (333) der Schnecke (330) befestigte Abtriebsscheibe (397) und einen zwischen der Antriebsscheibe (375) und der Abtriebsscheibe (397) liegenden Riemen (377) umfasst.

5. Spritzgießmaschine (10) nach einem der Ansprüche 1 bis 4, ferner umfassend:
eine lineare Bewegungseinheit (380), die sich in Bezug auf den Einspritzrahmen (303) frei vor- und zurückbewegt;
einen Einspritzmotor (350), der so konfiguriert ist, dass er die Schnecke (330) via die lineare Bewegungseinheit (380) vor- und zurückbewegt; und
einen Bewegungsumwandlungsmechanismus (390), der so konfiguriert ist, dass er eine Drehbewegung des Einspritzmotors (350) in eine lineare Bewegung der linearen Bewegungseinheit (380) umwandelt,
wobei die lineare Bewegungseinheit (380) einen ersten Lagerhalter (384) umfasst, der so konfiguriert ist, dass er ein erstes Lager (383) zur drehbaren Lagerung der Verzahnung (371) hält, und einen zweiten Lagerhalter (386), der so konfiguriert ist, dass er ein zweites Lager (385) zur drehbaren Lagerung der Schnecke (330) hält.

6. Spritzgießmaschine (10) nach Anspruch 5, ferner umfassend:
einen Lastdetektor (360), der so konfiguriert ist, dass er eine zwischen dem Einspritzmotor (350) und der Schnecke (330) übertragene Last misst,
wobei der Bewegungsumwandlungsmechanismus (390) eine Kugelumlaufspindel (391) umfasst,
die Kugelumlaufspindel (391) eine Kugelumlaufspindelwelle (392) und eine auf die Kugelumlaufspindelwelle (392) geschraubte Kugelumlaufmutter (393) umfasst, und
die Kugelumlaufmutter (393) via den Lastdetektor (360) an der linearen Bewegungseinheit (380) befestigt ist.

7. Spritzgießmaschine (10) nach Anspruch 5, ferner umfassend:
einen Lastdetektor (360), der so konfiguriert ist, dass er eine zwischen dem Einspritzmotor (350) und der Schnecke (330) übertragene Last misst,
wobei der Bewegungsumwandlungsmechanismus (390) eine Kugelumlaufspindel (391) umfasst,
die Kugelumlaufspindel (391) eine Kugelumlaufspindelwelle (392) und eine auf die Kugelumlaufspindelwelle (392) geschraubte Kugelumlaufmutter (393) umfasst, und
die Kugelumlaufmutter (393) via den Lastdetektor (360) an dem Einspritzrahmen (303) befestigt ist.

## Revendications

1. Une machine de moulage par injection (10) comprenant :
un cylindre (310) configuré pour chauffer un matériau de moulage ;
une vis (330) prévue pour pouvoir tourner et pour pouvoir avancer et reculer librement dans le cylindre (310) ;
un moteur de plastification (340) configuré pour faire tourner la vis (330) ;
un mécanisme de transmission de rotation (370) configuré pour transmettre une force de rotation du moteur de plastification (340) à la vis (330) ; et
un châssis d'injection (303) sur lequel le cylindre (310) est fixé ; et
le moteur de plastification (340) est fixé sur le châssis d'injection (303),
le mécanisme de transmission de rotation (370) comporte une cannelure (371),
un axe de centre de rotation (R1) de la vis (330) et un axe de centre de rotation (R2) de la cannelure (371) sont décalés en parallèle,
**caractérisée en ce que**
la cannelure (371) comporte un arbre cannelé (372) et un écrou cannelé (373) configurés pour transmettre la force de rotation à l'arbre cannelé (372) et se déplacer de façon relative dans une direction axiale de l'arbre cannelé (372),
l'arbre cannelé (372) est fixé sur un rotor du moteur de plastification (340), et
l'écrou cannelé (373) avance et recule conjointement avec la vis (330) par rapport au moteur de plastification (340).

2. Une machine de moulage par injection (10) comprenant :
un cylindre (310) configuré pour chauffer un matériau de moulage ;
une vis (330) prévue pour pouvoir tourner et pour pouvoir avancer et reculer librement dans le cylindre (310) ;
un moteur de plastification (340) configuré pour faire tourner la vis (330) ;
un mécanisme de transmission de rotation (370) configuré pour transmettre une force de rotation du moteur de plastification (340) à la vis (330) ; et
un châssis d'injection (303) sur lequel le cylindre (310) est fixé ; et
le moteur de plastification (340) est fixé sur le châssis d'injection (303),
le mécanisme de transmission de rotation (370) comporte une cannelure (371),
un axe de centre de rotation (R1) de la vis (330) et un axe de centre de rotation (R2) de la cannelure (371) sont décalés en parallèle,
**caractérisée en ce que**
la cannelure (371) comporte un arbre cannelé (372) et un écrou cannelé (373) configurés pour transmettre la force de rotation à l'arbre cannelé (372) et se déplacer de façon relative dans une direction axiale de l'arbre cannelé (372),
l'écrou cannelé (373) est fixé sur un rotor du moteur de plastification (340), et
l'arbre cannelé (372) avance et recule conjointement avec la vis (330) par rapport au moteur de plastification (340).

3. La machine de moulage par injection (10) selon la revendication 1 ou la revendication 2,
dans laquelle le mécanisme de transmission de rotation (370) comporte une transmission (374) configurée pour modifier et transmettre une vitesse de rotation de la cannelure (371) vers un arbre de prolongement (333) de la vis (330).

4. La machine de moulage par injection (10) selon la revendication 3, dans laquelle la transmission (374) comporte une poulie motrice (375) fixée sur la cannelure (371), une poulie entraînée (397) fixée sur l'arbre de prolongement (333) de la vis (330), et une courroie (377) placée entre la poulie motrice (375) et la poulie entraînée (397).

5. La machine de moulage par injection (10) selon l'une quelconque des revendications 1 à 4, comprenant en outre :
une unité de déplacement linéaire (380) qui avance et recule librement par rapport au châssis d'injection (303) ;
un moteur d'injection (350) configuré pour faire avancer et reculer la vis (330) via l'unité de déplacement linéaire (380) ; et
un mécanisme de conversion de mouvement (390) configuré pour convertir un mouvement de rotation du moteur d'injection (350) en un mouvement linéaire de l'unité de déplacement linéaire (380),
dans laquelle l'unité de déplacement linéaire (380) comporte un premier porte-palier (384) configuré pour maintenir un premier palier (383) destiné à supporter la cannelure (371) afin qu'elle puisse tourner, et un deuxième porte-palier (386) configuré pour maintenir un deuxième palier (385) destiné à supporter la vis (330) afin qu'elle puisse tourner.

6. La machine de moulage par injection (10) selon la revendication 5, comprenant en outre :
un détecteur de charge (360) configuré pour mesurer une charge transmise entre le moteur d'injection (350) et la vis (330),
dans laquelle le mécanisme de conversion de mouvement (390) comporte une vis à billes (391),
la vis à billes (391) comporte un arbre de vis à billes (392) et un écrou de vis à billes (393) vissé sur l'arbre de vis à billes (392), et
l'écrou de vis à billes (393) est fixé sur l'unité de déplacement linéaire (380) via le détecteur de charge (360).

7. La machine de moulage par injection (10) selon la revendication 5, comprenant en outre :
un détecteur de charge (360) configuré pour mesurer une charge transmise entre le moteur d'injection (350) et la vis (330),
dans laquelle le mécanisme de conversion de mouvement (390) comporte une vis à billes (391),
la vis à billes (391) comporte un arbre de vis à billes (392) et un écrou de vis à billes (393) vissé sur l'arbre de vis à billes (392), et
l'écrou de vis à billes (393) est fixé sur le châssis de d'injection (303) via le détecteur de charge (360).
